# EUROPEAN PATENT APPLICATION

(11) **EP 4 808 147 A1**
(43) Date of publication of application: **16.09.2026**
(21) Application number: 25163775.7
(22) Date of filing: 14.03.2025
(51) Int. Cl.: H04Q 1/02

(54) **APPARATUS AND METHOD FOR SERVICING A MULTI-PORT NETWORK DEVICE**

(71) Applicant: Deutsche Telekom AG, 53113 Bonn (DE)
(72) Inventor: NÖCKEL, Philipp, 53721 Siegburg (DE); KOWALEWSKI, Normen, 53229 Bonn (DE)
(74) Representative: RDL Patentanwälte PartG mbB

(57) **Abstract**

Apparatus for servicing a multi-port network device, the multi-port network device comprising a plurality of physical ports, and method for servicing a multi-port network device.

## Description

The invention relates to an apparatus for servicing a multi-port network device, the multi-port network device comprising a plurality of physical ports. The invention further relates to method for servicing a multi-port network device.

The physical ports of the multi-port network device are used by network cables, cables for short, which are inserted into the physical ports. More precisely, plugs of the cables or interface modules connected to the cables are inserted, i.e. plugged into the physical ports. Herein, the cables and the interface modules are pluggable, i.e., have plugs, e.g., to be inserted into the physical ports and may be either electric cables or optic cables.

Concerning the interface modules, it is noted that interface modules have serial numbers and relations between interface modules and cables must be conserved throughout the service at least for administrative reasons as the interface-modules and their relations to the cables are carefully documented in most cases.

Usually, a plurality of multi-port network devices is attached to a rack causing an extremely high cable density in the rack. The extremely high cable density renders servicing a multi-port network device very tedious, ineffective and error-prone.

It is, therefore, an object of the invention to provide an apparatus which facilitates servicing a multi-port network device. Another object of the invention is a method for servicing a multi-port network device.

A first aspect of the invention is an apparatus for servicing a multi-port network device, the multi-port network device comprising a plurality of physical ports. The multi-port network device has a high port density, i.e., a large number of physical ports within a small space. Correspondingly, a number of cables connected to the multi-port network device and, hence, a cable density close to the multi-port network device is also large.

According to the invention, the apparatus comprises a plate and a plurality of physical ports held by the plate, a configuration of which matches a configuration of physical ports of the multi-port network device. The configuration comprises a number of the physical ports and/or a relative arrangement of the physical ports. The respective configurations of the apparatus and the multi-port network device match in case at least two physical ports of the apparatus and at least two physical ports of the multi-port network device are arranged identically relative to each other. Matching configurations do not require the respective numbers of physical ports to be equal.

For example, physical ports of the apparatus and physical ports of the multi-port network device match in case the further ones and the latter ones are both arranged linear, i.e., in respective rows which ideally have identical distances between neighboring physical ports but may have different numbers of physical ports.

Preferably, the apparatus comprising a blind plug to be inserted into a physical port of the apparatus matching an unused physical port of the multi-port network device or into a physical port of the apparatus not matching a physical port of the multi-port network device. The blind plug is configured to fit into the physical port and prevent the physical port from being used by a cable. Blind plugs allow for downsizing the apparatus for a partially used multi-port network device or for a relatively smaller multi-port network device, i.e., a multi-port network device having less physical ports than the apparatus. Blind plugs reduce a number of usable physical ports of the apparatus to a number of used ports of the multi-port network device.

A number of the physical ports of the apparatus advantageously matches a number of the physical ports of the multi-port network device. Of course, an ideal match comprises identical numbers of the respective physical ports which additionally may be arranged identically. Usually, all relevant physical ports of the multi-port network device are shaped identically and so are the relevant physical ports of the apparatus. However, the physical ports of the apparatus are not required to provide an inserted cable with an operational connectivity. Rather are the physical ports of the apparatus to sufficiently grip the inserted cables, more precisely the plugs of the cables, and mechanically, frictionally in particular, preventing them from unintentionally being extracted from the physical ports.

The apparatus may comprise an attaching means for attaching the apparatus to a rack the multi-port network device is attached to. The attaching means are configured corresponding to attaching means of the rack and allow the apparatus to be attached to, i.e., mounted to the rack like the multi-network device. The attaching means facilitate a use of the apparatus in case the rack provides enough space for attaching the apparatus.

In an embodiment, the apparatus is configured for being attached instead of a 1RU blind. The 1RU blind is essentially a plate with opposite attaching means and covering one height unit of the rack. 1RU blinds are usually mounted to the rack between two neighboring multi-port network devices, thus, covering a gap between the neighboring network devices. In case a 1RU blind is mounted to the rack, the apparatus may easily and temporarily mounted to the rack instead of the 1RU blind, i.e., during servicing the multi-port network device.

The apparatus favorably consists of an electrically conductive material and comprises a ground connector conductively connected to the electrically conductive material. The electrically conductive material and the ground connector allow for ensuring the apparatus to be at a mass, i.e., zero potential, thus, preventing any damage caused by an occasional static electric potential difference between the apparatus and a reference potential. This way, the apparatus protects inserted cables from being damaged by a static electric energy.

In another embodiment, an insertion/extraction direction of the physical ports deviates from an insertion/extraction direction of the physical ports of the multi-port network device by an angle in a range from 5° to 15° and preferably by an angle of 10°. The inclination provides more space for servicing the multi-port network device and, at the same time, does not cause the cables to be bent unnecessarily and beyond specification while being connected to the apparatus.

Another aspect of the invention is a method for servicing a multi-port network device. Usually, servicing the multi-port network device requires, before any servicing action, freeing the multi-port network device from the cables inserted into physical ports of the multi-port network device and, after the service, inserting the cables in the exact physical ports of the multi-port network device they have been extracted from before. In case the multi-port network device is replaced during the service the cables are, of course, inserted into respective physical ports of a replacing multi-port network device, positions of the respective physical ports of the replacing multi-port network device exactly matching positions of the physical ports of the replaced multi-port network device.

According to the invention, an apparatus according to an embodiment of the invention is attached to a rack holding a multi-port network device to be serviced, each cable connected to a physical port of the multi-port network device is extracted from the physical port of the multi-port network device and inserted into a corresponding physical port of the apparatus, the multi-port network device is serviced, each cable connected to a physical port of the apparatus is extracted from the physical port of the apparatus and inserted into a corresponding physical port of the serviced multi-port network device, and the apparatus is separated from the rack. Shortly summarized, the apparatus is used as a temporary storage for the cables connected to the multi-port network device. The temporary storage keeps an order and a completeness of the cables and, thus, prevents the cables from being reconnected erroneously. No extra documentation concerning the order and number of cables is required for servicing the multi-port network device drastically reducing an effort of the service. Particularly, relations between cables and interface modules are conserved.

Preferably, the apparatus is attached to the rack at a position neighboring the multi-port network device to be serviced. The attachment to the rack ensures a fixed position of the apparatus while the neighboring position prevents the cables inserted into physical ports of the apparatus from being strongly bent.

The apparatus may be attached immediately above or immediately below the multi-port network device to be serviced. Thus, the cables may essentially stay in place during servicing the multi-port network device.

The apparatus is advantageously arranged instead of a 1RU blind. The 1RU blind may be considered being just a placeholder for the apparatus, i.e., temporarily giving room to the apparatus in the context of the invention. 1RU blinds are often mounted to racks between multi-port network devices.

In an alternative embodiment, the apparatus is appended to the rack by means of strings. In case there is no space left for mounting the apparatus to the rack it may still be attached, i.e., be appended to the rack using strings connected to the rack above the multi-port network device to be serviced.

Preferably, a ground connector of the apparatus is connected to an electric mass. Connecting the ground connector to the electric mass, i.e., zero potential protects the cables inserted into physical ports of the multi-port network device from being damaged by a static electric energy.

Favorably, an order of extracting the cables from the apparatus is converse relative to an order of inserting the cable into the apparatus. Changing the order between inserting and extracting further reduces an error probability concerning extraction and reinsertion of the cables.

Servicing the multi-port network device may comprise replacing the multi-port network device by a spare multi-port network device. In many cases a defective multi-port network device is replaced by a functional one. However, the defective multi-port network device may also be repaired and remounted to the rack.

An essential advantage of the inventive apparatus is that it substantially facilitates servicing a multi-port network device. Not only a documentary effort is reduced, but also a risk of damage to the cables caused by the service is reduced, the damage comprising breaking, wearing, dusting and the like. Moreover, order and/or completeness errors are effectively avoided when extracting and reinserting the cables from and into, respectively, the physical ports of the multi-port network device. Each avoided cabling error saves a relevant amount of time used for finding the error. After all, a downtime of the multi-port network device is minimized. Thus, both an efficiency and costs of servicing the multi-port network device are drastically increased.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows a multi-port network device according to the state of the art;
- Fig. 2: schematically shows an apparatus according to the invention for servicing the multi-port network device shown in fig. 1;
- Fig. 3: schematically shows a rack holding the multi-port network device shown in fig. 1 and two apparatuses shown in fig. 2.

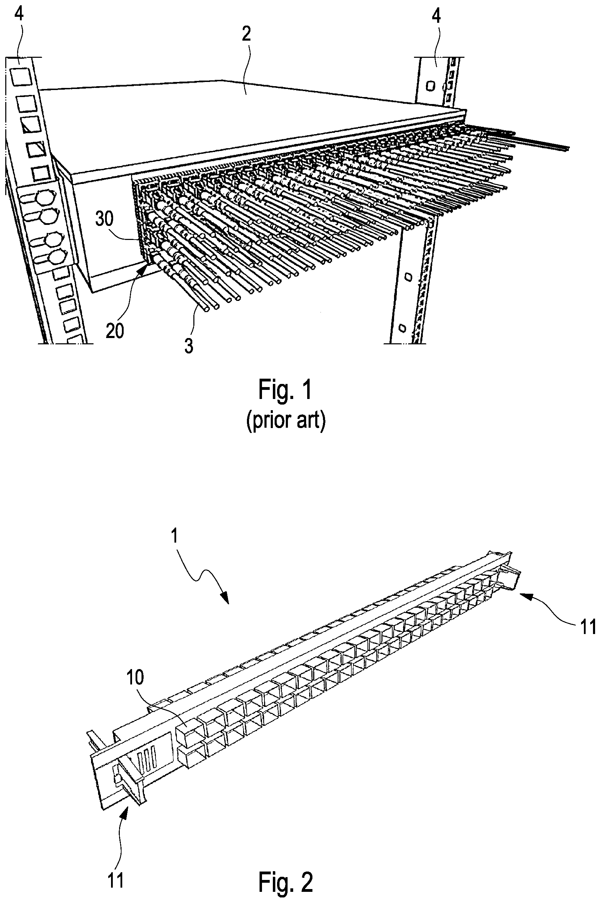

Fig. 1 schematically shows a multi-port network device 2 according to the state of the art. The multi-port network device 2 comprises a plurality of physical ports 20. Exemplarily, the physical ports 20 are arranged in four rows extending parallel with each row having 24 physical ports 20. The multi-port network device 2 is attached to a rack 4.

A plurality of cables 3, more precisely a plurality of interface modules 30 connected to respective pairs of cables 3, is inserted into the physical ports 20. Each physical port 20 of the multi-port network device is occupied by a cable 3, i.e., each physical port 20 is in use. Accordingly, there are 192 cables 3 connected to the multi-port network device 2.

Fig. 2 schematically show an apparatus 1 according to the invention for servicing the multi-port network device 2 shown in Fig. 1. The apparatus 1 comprises a plate and a plurality of physical ports 10 held by the plate. A configuration of physical ports 10 of the apparatus 1 matches a configuration of physical ports 20 of the multi-port network device 2 to be serviced. Exemplarily, the physical ports 10 are arranged in two rows extending parallel with each row having 24 physical ports 10. While a number of the physical ports 10 of the apparatus 1 may match a number of the physical ports 20 of the multi-port network device 2, the shown apparatus 1 has half a number of the physical ports 20 of the multi-port network device 2, i.e., 48 physical ports 10.

The apparatus 1 may comprise a blind plug (not shown) to be inserted into a physical port 10 of the apparatus 1 matching an unused physical port 20 of the multi-port network device 2 or not matching a physical port 20 of the multi-port network device 2.

The apparatus may further comprise an attaching means 11 for attaching the apparatus 1 to the rack 4 the multi-port network device 2 is attached to. The attaching means 11 are configured at opposite free ends of the plate of the apparatus 1. The apparatus is exemplarily configured for being attached instead of a 1RU blind.

The apparatus preferably consists of an electrically conductive material and comprises a ground connector (not shown) conductively connected to the electrically conductive material.

An insertion/extraction direction of the physical ports 10 may deviate from an insertion/extraction direction of the physical ports 20 of the multi-port network device 2 by an angle in a range from 5° to 15° and preferably by an angle of 10°.

The multi-port network device 2 is serviced using the apparatus 1 by carrying out a method according to the invention as follows.

The apparatus 1 is attached to the rack 4 holding the multi-port network device 2 to be serviced. Favorably, the apparatus 1 is attached to the rack 4 at a position neighboring the multi-port network device 2 to be serviced. The apparatus 1 may be attached immediately above or immediately below the multi-port network device 2 to be serviced. The apparatus 1 is arranged instead of a 1RU blind. In the present example, two apparatuses 2 are attached to the rack 4, one immediately above the multi-port network device 2 instead of a 1RU blind, and the other one immediately below the multi-port network device 2 instead of a 1RU blind.

Alternatively, the apparatus 1 may be appended to the rack 4 by means of strings, the strings being attached to the rack above the multi-port network device 2.

A ground connector of the apparatus 1 is connected to an electric mass.

Each cable 3 connected to a physical port 20 of the multi-port network device 2 is then extracted from the physical port 20 of the multi-port network device 2 and inserted into a corresponding physical port 10 of the apparatus 1.

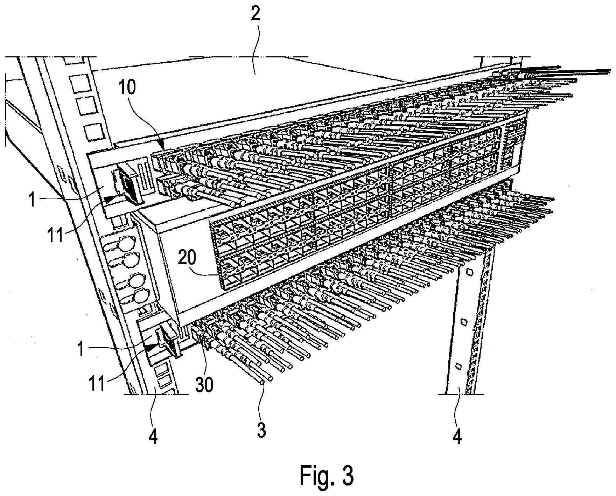

Fig. 3 schematically shows the rack 4 holding the multi-port network device 2 shown in fig. 1 and two apparatuses 1 shown in fig. 2. The multi-port network device 2 is free of cables 3 while half of the cables 3 is connected to the upper apparatus 1 and half of the cables 3 is connected to the lower apparatus 1.

The multi-port network device 2 is serviced. Servicing the multi-port network device 2 may comprise replacing the multi-port network device 2 by a spare multi-port network device 2.

Each cable 3 connected to a physical port 10 of the apparatus 1 is extracted from the physical port 10 of the apparatus 1 and inserted into a corresponding physical port 20 of the serviced multi-port network device 2. An order of extracting the cables 3 from the apparatus 1 is advantageously converse relative to an order of inserting the cables 3 into the apparatus 1.

The apparatus 1 is separated from the rack 4.

### Reference Numerals

- 1: apparatus
- 10: physical port
- 11: attaching means
- 2: multi-port network device
- 20: physical port
- 3: cable
- 30: interface module
- 4: rack

## Claims

1. An apparatus (1) for servicing a multi-port network device (2), the apparatus (1) comprising a plate and a plurality of physical ports (10) held by the plate, a configuration of which matches a configuration of physical ports (20) of the multi-port network device (2) to be serviced.

2. The apparatus according to claim 1, comprising a blind plug to be inserted into a physical port (10) of the apparatus (1) matching an unused physical port (20) of the multi-port network device (2) or not matching a physical port (20) of the multi-port network device (2).

3. The apparatus according to claim 1 or 2, wherein a number of the physical ports (10) of the apparatus (1) matches a number of the physical ports (20) of the multi-port network device (2).

4. The apparatus according to one of claims 1 to 3, comprising an attaching means (11) for attaching the apparatus (1) to a rack (4) the multi-port network device (2) is attached to.

5. The apparatus according to claim 4, being configured for being attached instead of a 1RU blind.

6. The apparatus according to one of claims 1 to 5, consisting of an electrically conductive material and comprising a ground connector conductively connected to the electrically conductive material.

7. The apparatus according to one of claims 1 to 6, wherein an insertion/extraction direction of the physical ports (10) deviates from an insertion/extraction direction of the physical ports (20) of the multi-port network device (2) by an angle in a range from 5° to 15° and preferably by an angle of 10°.

8. A method for servicing a multi-port network device (2), wherein
- an apparatus (1) according to one of claims 1 to 7 is attached to a rack (4) holding a multi-port network device (2) to be serviced;
- each cable (3) connected to a physical port (20) of the multi-port network device (2) is extracted from the physical port (20) of the multi-port network device (2) and inserted into a corresponding physical port (10) of the apparatus (1);
- the multi-port network device (2) is serviced;
- each cable (3) connected to a physical port (10) of the apparatus (1) is extracted from the physical port (10) of the apparatus (1) and inserted into a corresponding physical port (20) of the serviced multi-port network device (2);
- the apparatus (1) is separated from the rack (4).

9. The method according to claim 8, wherein the apparatus (1) is attached to the rack (4) at a position neighboring the multi-port network device (2) to be serviced.

10. The method according to claim 8 or 9, wherein the apparatus (1) is attached immediately above or immediately below the multi-port network device (2) to be serviced.

11. The method according to one of claims 8 to 10, wherein the apparatus (1) is arranged instead of a 1RU blind.

12. The method according to one of claims 8 to 11, wherein the apparatus (1) is appended to the rack (4) by means of strings.

13. The method according to one of claims 8 to 12, wherein a ground connector of the apparatus (1) is connected to an electric mass.

14. The method according to one of claims 8 to 13, wherein an order of extracting the cables (3) from the apparatus (1) is converse relative to an order of inserting the cables (3) into the apparatus (1).

15. The method according to one of claims 8 to 14, wherein servicing the multi-port network device (2) comprises replacing the multi-port network device (2) by a spare multi-port network device (2).
